Europäisches Patentamt

European Patent Office

Office européen des brevets

(19)

(11) EP 0 653 061 B1

(12) **EUROPÄISCHE PATENTSCHRIFT**

(45) Veröffentlichungstag und Bekanntmachung des Hinweises auf die Patenterteilung:
**10.06.1998   Patentblatt 1998/24**

(21) Anmeldenummer: **93917522.0**

(22) Anmeldetag: **02.08.1993**

(51) Int Cl.⁶: **G01N 29/04**, **B23K 11/25**, G01N 29/18

(86) Internationale Anmeldenummer:
**PCT/DE93/00675**

(87) Internationale Veröffentlichungsnummer:
**WO 94/03799 (17.02.1994 Gazette 1994/05)**

(54) **VERFAHREN ZUR BEWERTUNG VON SCHWEISSVERBINDUNGEN**

PROCESS FOR ASSESSING WELDED JOINTS

PROCEDE POUR L'EVALUATION D'ASSEMBLAGES SOUDES

(84) Benannte Vertragsstaaten:
**AT BE ES FR GB IT NL PT SE**

(30) Priorität: **31.07.1992   DE 4225251**

(43) Veröffentlichungstag der Anmeldung:
**17.05.1995   Patentblatt 1995/20**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder: **WASCHKIES, Eckhard**
**D-66440 Blieskastel (DE)**

(74) Vertreter: **Münich, Wilhelm, Dr.**
**Kanzlei Münich, Steinmann, Schiller**
**Wilhelm-Mayr-Str. 11**
**80689 München (DE)**

(56) Entgegenhaltungen:
**EP-A- 0 284 177          DE-A- 1 473 400**
**FR-A- 2 334 461**

- **PATENT ABSTRACTS OF JAPAN vol. 013, no. 138 (P-852)5. Juni 1987 & JP,A,63 305 244 (SUMITOMO METAL IND.) 13. Dezember 1988**

**Beschreibung**

**Technisches Gebiet**

Die Erfindung bezieht sich auf ein Verfahren zur Bewertung von Schweißvorgängen und inbesondere von Widerstandsschweißungen, unter Verwendung einer Ultraschallquelle, die den Schweißbereich mit Ultraschallwellen beaufschlagt, und eines Ultraschallempfängers.

Das erfindungsgemäße Verfahren ist nicht nur beim Widerstandsschweißen, sondern bei den verschiedensten Schweißvorgängen, wie Laserschweißen, Gasschweißen etc. anwendbar.

**Stand der Technik**

In "Materials Evaluation" Nr. 47 vom August 1989, Seiten 935 - 943 wird ein Verfahren beschrieben, bei dem der Schweißbereich bzw. der Schweißpunkt während des gesamten Widerstandsschweißprozesses durchschallt wird.

Der Widerstandsschweißprozess besteht i.a. aus drei Phasen. Die erste Phase ist die sogenannte Vorpreßzeit. In dieser Zeit fließt kein Strom. Die Elektroden schließen sich; hierdurch wird die Elektrodenkraft von 1-3 KN aufgebaut. Danach folgt die Stromflußphase, in der die Bleche aufgeheizt werden. An die Stromflußphase schließt sich die Nachpreßzeit oder Abkühlphase an. In dieser Phase kühlt die Schweißlinse ab, erst danach öffnen sich die Schweißelektroden. Alle drei Phasen sind im Regelfall gleich lang.

Die Durchschallung erfolgt bei dem vorgenannten Verfahren mit einem longitudinalen Ultraschallgeber im Frequenzbereich von 2 MHz, der innerhalb der Schweißelektroden am Elektrodenboden angebracht ist. Die Durchschallung beginnt in der Vorpreßzeit, in der noch kein Strom fließt, und dauert bis zum Ende der Nachpreßphase. Insbesondere wird dabei die Ultraschalldurchlässigkeit des Schweißpunktes in der Nachpreßphase bewertet, wobei die Abkühldauer bis zum Erreichen des Minimums der Ultraschalldurchlässigkeit bestimmt und mit dem aufgeschmolzenen Schweißlinsenvolumen korreliert wird.

Das Minimum der Ultraschalldurchlässigkeit entsteht nach der in diesem Artikel vertretenen Ansicht am Umwandlungspunkt des Eisens vom austenitischen in den ferritischen Zustand (Curiepunkt) infolge einer erhöhten Ultraschallabsorption an diesem Umwandlungspunkt.

Nachteilig an diesem Verfahren ist jedoch, daß der Schweißprozeß bereits beendet ist und die Schweißlinse abkühlt, wenn die Schweißlinsenbewertung durchgeführt wird. Der Schweißprozeß kann nicht mehr beeinflußt werden. Eine als fehlerhaft erkannte Schweißung kann allenfalls nachgeschweißt werden.

Aus der DE-AS 26 55 415 ist eine Vorrichtung zum Überwachen eines Widerstands-Punktschweißvorgangs bekannt, bei der der Schweißpunkt vom inneren Elektrodenboden aus während des Stromflußes durchschallt wird, wobei das an der gegenüberliegenden Elektrode reflektierte Ultraschallsignal empfangen und ausgewertet wird.

In dieser Druckschrift wird über die benutzte Wellenart nicht ausgesagt; der Verlauf aer Ultraschalldurchlässigkeit hängt aber wesentlich von der benutzten Wellenart ab, so die Annahme, daß die Schalldurchlässigkeit des Schweißpunktes während des Schweißvorganges zunächst ein relatives Maximum erreicht, dann auf ein Minimum abfällt und im weiteren Verlauf wieder auf ein zweites Maximum ansteigt, nicht nachvollziehbar ist.

Das erste Maximum der Ultraschalldurchlässigkeit wird dadurch erklärt, daß der Temperaturanstieg in den zu verschweißenden Blechen den Ultraschallkontakt zwischen den Elektroden und dem Blech sowie zwischen den Blechen verbessert. Das darauffolgende Minimum soll davon herrühren, daß das Schweißgut aufschmilzt. Das aufgeschmolzene Eisen erhöht die Ultraschallabsorption und reduziert die Schalldurchlässigkeit. Der im weiteren Verlauf der Schweißung sich ergebende erneute Anstieg der Ultraschalldurchlässigkeit wird nicht erklärt, obwohl - wie erst erfindungsgemäß erkannt worden ist - dieser Anstieg wesentlich für die Bewertung des Schweißvorganges ist. Das Bewertungsverfahren ermittelt den Betrag des erneuten Anstieges der Ultraschalldurchlässigkeit. Aus dieser Meßgröße wird die Größe der Schweißlinse·bestimmt. Die physikalische Erklärung für dieses Verfahrensprinzip ist in sich widersprüchlich. Das Verfahren beruht auf der Messung der Differenz zweier. Ultraschalldurchlässigkeitswerte.

Das in "Materials Evaluation" Nr. 15 vom Oktober 1967, Seite 226 - 230 vorgeschlagene Verfahren arbeitet ebenfalls mit Ultraschallsensoren, die hochfrequente longitudinale Ultraschallsignale im Frequenzbereich von 2 MHz erzeugen, mit denen die Durchschallung der Schweißpunkte durchgeführt wird.

Nach Ansicht der Autoren ist jedoch mit einer Durchschallung des Schweißpunktes dessen Bewertung nicht möglich, zumindest nicht in der Abkühlphase. Die Autoren dieses Artikels begründen dies mit einer Spaltbildung zwischen den Schweißelektroden und den zu verschweißenden Blechen. Bei der Erstarrung der Schweißlinse schrumpft das Material, wodurch sich zwischen Elektrode und Blech ein Spalt bildet, der die Ultraschalldurchlässigkeit vermindert.

Weiterhin kann aus dem Verlauf der Ultraschalldurchlässigkeit vor, während und nach der Schweißung, lediglich auf das Maß der Wärmeeinbringung in den Schweißpunkt geschlossen werden.

Bei dem vorgeschlagenen Verfahren wird deshalb der Verlauf der Ultraschalldurchlässigkeit des gesamten Schweißvorganges von der Vorpreßzeit bis einschließlich der Abkühlphase mit einem vorgegebenen Musterverlauf verglichen. Das Verfahren analysiert jedoch nicht das Verhalten der Ultraschalldurchlässigkeit während der Stromflußphase.

In Materialprüfung 32 (1990) 10; Seiten 311 - 312 werden Untersuchungsergebnisse zur Ultraschallprüfung von Punktschweißungen vorgestellt: Bei diesen Untersuchungen wird die Schalldurchlässigkeit in der Vorpreßzeit vor Beginn des Stromflusses verglichen mit der Ultraschalldurchlässigkeit in der Nachpreßzeit nach Beendigung des Stromflusses.

Das Absinken der Ultraschalldurchlässigkeit der Schweißlinse in der Abkühlphase gegenüber der höheren Ultraschalldurchlässigkeit vor der Schweißung wird mit einer Spaltbildung zwischen Elektrode und Blech erklärt. Dabei wird die Ansicht vertreten, daß es wegen der Spaltbildung zwischen Schweißelektroden und den zu verschweißenden Blechen prinzipiell unmöglich ist, mit einer Durchschallung der Schweißpunkte Klebeschweißungen zu erkennen.

Das hier beschriebene technische Handeln beschränkt sich also auf einen Vergleich der Ultraschalldurchlässigkeit des Schweißpunktes vor und nach der Stromflußphase. Die Ultraschalldurchlässigkeit während der Stromflußphase wird nicht analysiert.

Ein weiteres Verfahren zur Bewertung von Schweißverbindungen ist der EP-A-284 177 entnehmbar. Dort wird die Änderung der Schallgeschwindigkeit währendes Schweißvorgangs ausgewertet.

## Darstellung der Erfindung

Der Erfindung liegt die Aufgabe zugrunde, ein Verfahren zur Bewertung von Schweißvorgängen und inbesondere von Widerstandsschweißverbindungen unter Verwendung einer Ultraschallquelle, die den Schweißbereich mit Ultraschallwellen beaufschlagt, und eines Ultraschallempfängers, anzugeben, das on-line während des Schweißvorganges zur Bewertung der Schweißverbindung die Ermittlung der für die Güte der Schweißung relevanten Parameter erlaubt, und das insbesondere während des Zeitraumes, während dem ein aufgeschmolzener Bereich existiert, Aussagen über den Schweißvorgang liefert.

Weiterhin soll erfindungsgemäß eine Anordnung zur Bewertung von Schweißvorgängen angegeben werden, die es bei der Analyse von Widerstandsschweißverbindungen erlaubt, aie Ultraschallsensorik vom Elektrodenboden wegzuverlagern.

Eine erfindungsgemäße Lösung dieser Aufgabe mit ihren Weiterbildungen ist in den Patentansprüchen angegeben.

Die Erfindung geht von dem Grundgedanken aus, die Temperaturabhängigkeit der Ultraschalldurchlässigkeit der Schweißlinse bzw. des Schweißpunktes in der Stromflußphase für die Schweißpunktbewertung zu nutzen.

Bei allen aus dem Stand der Technik bekannten Vorschlägen, ausgenommen die in der DE-AS 26 55 415 beschriebene Vorrichtung, wird nicht die Ultraschalldurchlässigkeit des Schweißpunktes während der Stromflußphase analysiert.

Die Bewertung der Ultraschalldurchlässigkeit des Schweißpunktes während der Stromflußphase beschränkt sich jedoch in der DE-AS 26 55 415 auf die Bestimmung der Differenz zweier Amplitudenwerte: der Differenz zwischen der Ultraschalldurchlässigkeit am Ende der Stromflußphase und dem Minimalwert der Ultraschalldurchlässigkeit während der Stromflußphase. Eine physikalische Erklärung für diese Vorgehensweise wird nicht gegeben. Das Bewertungsverfahren selbst steht darüberhinaus im Widerspruch zu den Erkenntnissen der vorliegenden Erfindung über die Temperaturabhängigkeit der Ultraschalldurchlässigkeit der Schweißpunkte für Transversal- bzw. Torsionswellen.

Wesentliche Gründe für die Temperaturabhängigkeit der Ultraschalldurchlässigkeit der Schweißpunkte sind nämlich bisher nicht erkannt worden. Dies wird im folgenden näher erläutert:

In den eingangs genannten Druckschriften werden unterschiedliche Ursachen für die Veränderung der Ultraschalldurchlässigkeit während der einzelnen Phasen des Schweißprozesses genannt. Beispielsweise wird eine erhöhte Schallschwächung bei der Curietemperatur oder am Schmelzpunkt angenommen. Des weiteren wird eine Spaltbildung zwischen den Schweißelektroden und den Blechen für die Ultraschallschwächung in der Abkühlphase verantwortlich gemacht.

Im Gegensatz dazu geht die Erfindung davon aus, daß die Durchschallung des Schweißpunktes - beispielsweise von den Schweißelektroden aus - modellmäßig als Ultraschalldurchgang durch eine planparallele Platte beschrieben werden kann, wobei die Elektroden die Rolle des schallein- bzw. ableitenden Mediums spielen, und das Schweißgut die Rolle der durchschallten Platte. Diese Modellvorstellung gilt entsprechend abgewandelt auch für andere Schweißverfahren.

Aufbauend auf diesem der Erfindung zugrundeliegenden Gedanken werden erfindungsgemäß zwei Vorgehensweisen vorgeschlagen, die kumulativ eingesetzt werden können. Beim kumulativen Einsatz ist dann eine Kontrolle der mit der ersten Vorgehensweise erhaltenen Ergebnisse durch die mit der zweiten Vorgehensweise erhaltenen Ergebnisse möglich:

Bei der ersten Vorgehensweise wird erfindungsgemäß davon ausgegangen, daß die Ultraschalldurchlässigkeit des Schweißgutes in der festen Phase, d.h. vor Erreichen der Schmelztemperatur, durch die Temperaturabhängigkeit des Schallwellenwiderstandes des Schweißgutes bestimmt wird. Aus dieser Temperaturabhängigkeit wird der Temperaturverlauf im Schweißpunkt ermittelt. Aus dem Temperaturverlauf und dem Aufschmelzzeitpunkt wird während der Schweißung der (voraussichtlich erreichte) Schweißlinsendurchmesser errechnet.

Erfindungsgemäß wird aus den während der Schweißung gemessenen Werten für die Schalldurchlässigkeit $D(t)$ die Schallgeschwindigkeit $c_2(t)$ im Schweißpunkt ermittelt. Die hierfür herangezogenen Gleichungen (3) und (4) sind Näherungsformeln (für den Fall planparalleler Platten), die vom Anwendungfall abhängig auch durch andere Näherungen ersetzt werden können.

$$(3) \qquad D(t) = 1/\{1+1/4*[m(t)-1/m(t)]^2*\sin^2(2*\pi*d/\lambda)\}$$

wobei gilt:

$$(2) \qquad m(t) = Z_1/Z_2$$

und

$$(1) \qquad Z_1 = \sigma_1{}^*c_1(t)$$

$$Z_2 = \sigma_2{}^*c_2(t)$$

In den Gleichungen (1) bis (3) bedeuten:

$Z_1$  Schallwellenwiderstand der Elektroden,
$Z_2$  Schallwellenwiderstand der Schweißlinse,
$m$  Verhältnis der Schallwellenwiderstande $Z_1/Z_2$,
$D$  Ultraschalldurchlässigkeitsfaktor,
$\sigma_1$  Dichte der Schweißelektrodem,
$\sigma_2$  Dichte des Schweißgutes,
$c_1$  Schallgeschwindigkeit des Elektrodenmaterials,
$c_2$  Schallgeschwindigkeit des Schweißgutes,
$d$  Dicke der Schweißlinse,
$\lambda$  Ultraschallwellenlänge.

Aus Gleichung (3) ergibt sich durch Einsetzen der Gleichungen (1) und (2) und umformen:

$$(4) \qquad c_2(t) = (\sigma_1{}^*c_1/\sigma_2) * 1/\sqrt{(1+(\sigma_1{}^*c_1/\sigma_2)\sqrt{(1/D(t)-1)}/\pi*d*f}$$

In Gleichung (4) bedeutet f die Ultraschallfrequenz.

Von der Überlegung ausgehend, daß sich jedem Schalldurchlässigkeitswert $D(t)$ eine Temperatur $T(t)$ im Schweißpunkt zuordnen läßt, wird erfindungsgemäß der Temperaturverlauf im Schweißpunkt $T(t)$ als Funktion der Schweißdauer ermittelt. Die Erfindung beinhaltet damit auch ein Verfahren zur Temperaturmessung unter schwierigen Umgebungsbedingungen, wie sie beispielsweise bei Schweißungen vorliegen:

Hierzu wird die Schallgeschwindigkeit $c_2(t)$ im Schweißpunkt mit einer vorgegebenen Temperaturabhängigkeit der Schallgeschwindigkeit $c_2(T)$ verglichen, und so die jeweilige Temperatur ermittelt.

Im weiteren Verfahrensablauf wird aus dem ermittelten Temperaturverlauf im Schweißpunkt durch Vergleich des aktuellen Temperaturwertes $T(t)$ mit der Schmelztemperatur $T_s$ des Schweißgutes der Aufschmelzzeitpunkt $t_s$ im Schweißpunkt ermittelt.

Der ermittelte Aufschmelzpunkt $t_s$ kennzeichnet dabei den Beginn der Schweißlinsenbildung, wobei die ab diesem Zeitpunkt zugeführte Energie zur Schweißlinsenbildung dient.

Aus theoretischen Überlegungen findet man für den Zusammenhang zwischen dem Quadrat des Schweißlinsendurchmessers $\phi^2$ und dem Aufschmelzzeitpunkt $t_s$ einen Zusammenhang nach Gleichung (5)

$$(5) \qquad \phi^2 = \phi_e{}^2*2*T_s*B*c_s*(t-t_s)/(c_v*(\exp(B*t_s)-1))$$

In Gleichung (5) bedeuten:

$\phi$     Schweißlinsendurchmesser,

$\phi_e$     Elektrodendurchmesser,

$T_s$     Schmelztemperatur des Schweißgutes,

$c_s$     spezifische Schmelzwärme des Schweißgutes,

$c_v$     spezifische Wärme des Schweißgutes,

$t_s$     Aufschmelzzeitpunkt,

$t$     Gesamtschweißdauer.

B ist die Konstante aus der weiter unten angegebenen Gleichung (6).

Aus Gleichung (5) läßt sich direkt nach der Ermittlung des Aufschmelzzeitpunktes $t_s$ und noch während der Schweißung der am Ende der Schweißdauer t zu erwartende Schweißlinsendurchmesser $\phi$ ermitteln. Damit ist es prinzipiell möglich, noch während der Schweißung insbesondere durch Änderung der Stromstärke I oder der Schweißdauer t das Schweißergebnis regelnd zu beeinflussen.

Für den zeitlichen Temperaturverlauf T(t) im Schweißgut kann ein funktionaler Zusammenhang nach Gleichung (6) angenommen werden.

$$(6) \qquad T(t) = A*(1-\exp -(B*t))$$

Dabei gelten für die Konstanten A und B die Beziehungen

$$(7) \qquad A = J^2 *R_o *d/k$$

$$(8) \qquad B = k/ (c_v *\sigma *d)$$

In den Gleichungen (7) und (8) bedeuten

$J$     Stromdichte durch den Schweißpunkt,

$R_o$     spezifische elektrische Widerstand des Schweißgutes,

$d$     Blechdicke,

$k$     Wärmeleitzahl des Systems Blech/Elektrode,

$\sigma$     Dichte des Schweißgutes,

$c_v$     spezifische Wärme des Schweißgutes.

Aus (7) und (8) ergibt sich für die Stromdichte:

$$(11) \qquad J^2 = A*B*c_v *\sigma/d$$

Daraus leitet sich ab, daß die Stromdichte durch den Schweißpunkt direkt proportional dem Produkt der Konstanten A und B ist. Die Proportionalitätskonstanten sind bekannte Materialkonstanten, die gegebenenfalls auch experimentell ermittelt werden können.

Der zu ermittelnde reale Temperaturverlauf T(t) in der Schweißlinse wird durch Gleichung (6) angenähert, wobei die Konstanten A und B in Gleichung (6) beispielsweise durch ein "best fit"- Verfahren ermittelt werden.

Durch Benutzung der Gleichung (6) und der auf diese Weise bestimmten Konstanten A und B kann ein "best fit-Aufschmelzzeitpunkt" $t_s$ ermittelt werden. Dieser "best fit" Aufschmelzzeitpunkt $t_s$ ist weitgehend unabhängig von zufälligen Meßwertschwankungen der Ultraschalldurchlässigkeit D.

Zur Ermittlung der absoluten Schweißlinsengröße kann bei Messung der Stromstärke I der Elektrodendurchmesser $\phi_e$ nach Gleichung (12)

$$(12) \qquad \phi^2_e = I^2 *R_o /(A*B*c_v *\sigma)$$

bestimmt werden. In Gleichung (12) bedeuten

I  den Effektivwert der Stromstärke,

A  und B die Konstanten aus Gleichung 6,

$R_o$  der spez. elektrischen Widerstand des Schweißgutes,

$c_v$  die spez. Wärme des Schweißgutes,

$\sigma$  die Dichte des Schweißgutes.

Bei der <u>zweiten Vorgehensweise,</u> die zusätzlich eingesetzt werden kann, wird die Tatsache genutzt, daß Scherwellen, wie Transversal- oder Torsionswellen in Flüssigkeiten nicht bzw. schlecht ausbreitungsfähig sind. Die Ultraschallschwächung dieser Wellen wird <u>nach</u> Erreichen der Schmelztemperatur durch die Größe des aufschmelzenden Schweißlinsenvolumens bestimmt. Aus dem Wert der Ultraschallschwächung nach Erreichen der Schmelztemperatur im Schweißpunkt wird direkt die Größe des Schweißlinsendurchmessers ermittelt.

Erfindungsgemäß wird deshalb aus dem Ausgangssignal des Ultraschallempfängers der Zeitpunkt $t_s$ ermittelt, an dem die Schmelztemperatur $T_s$ des Schweißgutes erreicht wird, und sich eine Schweißlinse zu bilden beginnt.

Dabei kann insbesondere aus der Schwächung der Scherwellen nach dem Erreichen der Aufschmelztemperatur während des Schweißvorganges das Schweißlinsenvolumen V berechnet werden.

Dabei kann das momentane Schweißlinsenvolumen V zum Zeitpunkt $t > t_s$ über folgende Beziehung bestimmt werden:

$$(12') \qquad V = B' * (D(t) - D(t_s)) + C'$$

hierbei bedeuten:

B', C'  experimentell bestimmte Konstanten

D(t)  Ultraschalldurchlässigkeit zum Zeitpunkt t

$D(t_s)$  Ultraschalldurchlässigkeit beim Erreichen der Schmelztemperatur.

Züsätzlich ist es möglich, das am Ende der Schweißung erreichte Schweißlinsenvolumen V aus dem Zeitraum $\Delta t$ vom Aufschmelzzeitpunkt bis zum Ende der Schweißung über folgende Beziehung zu bestimmen:

$$(13) \qquad V = B'' * \Delta t + C'',$$

hierbei sind B'' und C'' ebenfalls experimentell zu ermittelnde Konstanten.

Bei einer weiteren Möglichkeit wird das in einem Zeitraum $\Delta t$ vom Erreichen der Schmelztemperatur bis zum Ende der Schweißung erreichbare Schweißlinsenvolumen über folgende Beziehung ermittelt:

$$(14) \qquad V = B'''(\Delta t + D(t_s) / ([D(t_s + \delta t) - D(t_s)]/\delta t)) + C'''$$

hierbei bedeuten:

B''', C'''  experimentell bestimmte Konstanten

$D(t_s)$  Ultraschalldurchlässigkeit beim Erreichen der Schmelztemperatur, und

$\delta t$  "Zeitdifferential", d.h. kleines Zeitintervall.

Weiterhin ist es möglich, zur Bestimmung der Schalldurchlässigkeit D(t) des Schweißbereichs während jeder Stromhalbwelle des Schweißstromes aus dem Ausgangssignal A(t) des Ultraschallempfängers innerhalb eines ersten Zeitfensters i, das gegenüber dem Ultraschall-Sendesignal, dessen Sendepegel konstant gehalten wird, um eine definierte Verzögerungszeit verzögert ist, die mittlere Ultraschallenergie $E_{1i}$ gemäß der folgender Gleichung zu ermitteln:

$$(15) \qquad E_{1i} = 1/\Delta t_1 \int_0^{\Delta t_1} A(t)^2 \, dt$$

Innerhalb eines zweiten, vor oder nach dem ersten Zeitfenster liegenden Zeitfensters, während dem keine Beaufschlagung des Schweißgutes mit Ultraschallwellen erfolgt, kann die durch den Schweißvorgang entstehende mittlere Schallemissionsenergie $E_{2j}$ gemäß der folgenden Gleichung ermittelt werden

$$(16) \qquad E_{2j} = 1/\Delta t_2 \int_{0}^{\Delta t_2} A(t)^2 \, dt.$$

Eine Alternative hierzu ist die folgende Vorgehensweise, gemäß der zur Bestimmung der Schalldurchlässigkeit D (t) des Schweißbereichs während jeder Stromhalbwelle des Schweißstromes aus dem Ausgangssignal A(t) des Ultraschallempfangers innerhalb eines ersten Zeitfensters i, das gegenüber dem Ultraschall-Sendesignal, dessen Sendepegel konstant gehalten wird, um eine definierte Verzögerungszeit verzögert ist, die Ultraschallgröße $E_{1i}$ aus dem maximalen innerhalb dieses Zeitfensters auftretenden Ausgangssignals A(t) ermittelt wird. Innerhalb eines zweiten, vor oder nach dem ersten Zeitfenster liegenden Zeitfensters, während dem keine Beaufschlagung des Schweißgutes mit Ultraschallwellen erfolgt, wird die durch den Schweißvorgang entstehende Schallemissionsgröße $E_{2j}$ aus dem maximalen innerhalb des zweiten Zeitfensters auftretenden Ausgangssignal A(t) ermittelt.

Diese Vorgehensweisen erlauben es, daß bestimmte Meßwerte für die Ultraschalldurchlässigkeit D korrigiert werden, wenn der laufend bestimmte Schallemissionspegel $E_{2j}$ einen vorgegebenen Schwellenwert überschreitet. Die Korrektur kann dadurch erfolgen, daß der gestörte Schalldurchlässigkeitswert $E_{1i}$ durch den Mittelwert der beiden Nachbarwerte ersetzt wird.

Bei der erfindungsgemäßen Anordnung zur Ultraschalleinbringung bei der Analyse von Widerstandsschweißverbindungen wird der Schweißpunkt während des Schweißens durchschallt: Die Ultraschallsignale werden mit einem Ultraschallwandler beispielsweise in eine der Schweißelektroden eingebracht; die Ultraschallsignale werden nach der Durchschallung des Schweißpunktes bzw. des geschweißten Bereichs von einem Empfänger empfangen, dessen Ausgangssignal zur Bewertung ung gegebenenfalls zur Regelung von Schweißprozessen eine Auswerte- und Steuereinheit auswertet,

Im Stand der Technik sind ausschließlich Verfahren zur Bewertung von Punktschweißungen mit Hilfe der Ultraschallanalyse beschrieben, bei denen der Schweißpunkt von einem der inneren Schweißelektrodenböden aus mit Ultraschallimpulsen in Form hochfrequenter Longitudinalwellen durchschallt wird. Im Gegensatz hierzu erfolgt erfindungsgemäß die Anordnung des Ultraschallsenders und ggf. -empfängers an der Außenwand des Elektrodenschaftes oder des Elektrodenhalters.

Hierfür ist jedoch Voraussetzung, daß die für die Durchschallung der Schweißpunkte erzeugten und eingesetzten Schallwellen ein gutes Ausbreitungsverhalten in der Elektrodenwandung haben. Dies wird dadurch ermöglicht, daß für die Durchschallung der Schweißlinse keine Longitudinalwellen benutzt werden, sondern Scherwellen und insbesondere Transversalwellen oder Torsionswellen. Die Ultraschallanregung erfolgt dabei derart, daß in den Elektrodenwandungen beispielsweise mit einem elektroakustischen Ultraschallwandler eine Transversal- oder Torsionswelle erzeugt wird.

Die konkrete Ausführung erfolgt in der Weise, daß an der Außenwand des Elektrodenschaftes oder des Elektrodenhalters der einen Elektrode des Schweißgerätes ein Ultraschallsender angeordnet wird und analog dazu die Außenwand der anderen Schweißelektrode mit einem Ultraschallempfänger versehen wird.

Falls ein Ultraschallwandler eingesetzt wird, der im Sende- und Empfangsbetrieb arbeiten kann, wird diese Ultraschallsensorik lediglich an der Außenwand des Elektrodenschaftes oder Elektrodenhalters einer Elektrode befestigt.

Die für die Durchschallung eingesetzten Transversal- oder Torsionswellen liegen dabei vorzugsweise im Frequenzband von 50 bis 500 kHz.

Der Arbeitsbereich kann aber auch bis 1 MHz betragen.

Für die Einleitung der horizontal polarisierten Transversalwelle in die Elektrodenwandung ist wesentlich, daß der Polarisationsvektor senkrecht zur Rohrachse der Elektroden verläuft.

**Kurze Beschreibung der Zeichnung**

Die Erfindung wird nachstehend anhand von Ausführungsbeispielen unter Bezugnahme auf die Zeichnung erläutert:

Fig. 1    die schematische Darstellung der Elektrodenanordnung einer Punktschweißanlage,

Fig. 2     die schematische Darstellung des Verlaufs einer Transversalwelle in der Rohrwandung einer Elektrode.

**Beschreibung von Ausführungsbeispielen**

Bei dem erfindungsgemäßen Verfahren wird aus den während der Schweißung gemessenen Werten für die Schalldurchlässigkeit D(t) die Schallgeschwindigkeit $c_2$(t) im Schweißpunkt zu ermittelt.

Für Widerstandsschweißungen von Blechen können die im folgenden angegebenen Näherungsformeln verwendet werden, die für den Anwendungsfall "Schalldurchgang durch eine planparallele Platte" gelten. Bei anderen Konfigurationen und/oder Schweißverfahren sind die Näherungsformeln entsprechend dem jeweiligen Anwendungsfall abzuwandeln:

$$(3) \qquad D(t) = 1/(1+1/4*(m(t)-1/m(t))^2*\sin^2(2*\pi*d/\lambda))$$

wobei

$$(2) \qquad m(t) = Z_1/Z_2$$

und

$$(1) \qquad Z_1 = \sigma_1*c_1(t)$$

$$Z_2 = \sigma_2*c_2(t)$$

In den Gleichung (1) - (3) bedeuten:

$Z_1$ =     Schallwellenwiderstand der Elektroden,
$Z_2$ =     Schallwellenwiderstand der Schweißlinse,
m =     Verhältnis der Schallwellenwiderstande $Z_1/Z_2$,
D =     Ultraschalldurchlässigkeitsfaktor,
$\sigma_1$ =     Dichte der Schweißelektrodem,
$\sigma_2$ =     Dichte des Schweißgutes,
$c_1$ =     Schallgeschwindigkeit des Elektrodenmaterials,
$c_2$ =     Schallgeschwindigkeit des Schweißgutes,
d =     Dicke der Schweißlinse,
$\lambda$ =     Ultraschallwellenlänge.

Aus Gleichung (3) erkennt man, daß der Durchlässigkeitsfaktor D vom Verhältnis m der Schallwellenwiderstände der Elektrode $Z_1$, und dem Schallwellenwiderstand $Z_2$ des Schweißgutes, abhängt. Die Schallwellenwiderstände der Schweißelektrode $Z_1$ und des Schweißgutes $Z_2$ ergeben sich nach Gleichung (1) näherungsweise aus dem Produkt von Dichte $\sigma$ und Schallgeschwindigkeit c in dem jeweiligen Medium.

Die Erfindung geht nun davon aus, daß die Änderung der Ultraschalldurchlässigkeit des Schweißpunktes durch die temperaturbedingte Änderung der Schallgeschwindigkeit $c_2$ im Schweißpunkt verursacht wird und zwar dadurch, daß bei einer Änderung der Schallgeschwindigkeit $c_2$ im Schweißpunkt, sich nach Gleichung (1) der Schallwellenwiderstand $Z_2$ des Schweißpunktes verändert, während der Schallwellenwiderstand der Elektroden $Z_1$ konstant bleibt. Damit ändert sich das Verhältnis der Schallwellenwiderstände m und entsprechend Gleichung (3) der Durchlässigkeitsfaktor D. Der Term mit $\sin^2(2*\pi*d/\lambda)$ soll im folgenden als Konstante betrachtet und zunächst unberücksichtigt bleiben.

Nimmt man an, daß die Schweißelektroden aus Kupfer sind und die zu verschweißenden Bleche aus Eisen, dann ist zu Beginn der Stromflußphase (bei Raumtemperatur) der Schallwellenwiderstand in Kupfer ($Z_1$ = 20,1) kleiner, als der Schallwellenwiderstand in Eisen ($Z_2$ = 25,3). Der Durchlässigkeitsfakor D ist damit zu Beginn der Schweißung nach Gleichung (3):     D < 1.

Beim Schweißen sinkt infolge der Temperaturerhöhung die Schallgeschwindigkeit im Eisen und damit auch der Schallwellenwiderstand $Z_2$. Die Schalldurchlässigkeit D erreicht nach Gleichung (3) temperaturbedingt zunächst ein Maximum, nämlich zu dem Zeitpunkt t, bei dem der Schallwellenwiderstand des Eisens $Z_2$ den Wert des Schallwellenwiderstandes der Schweißelektroden $Z_1$ annimmt; in diesem Fall ist m = 1 und nach Gleichung (3) ist dann die Durchlässigkeit D des Schweißpunktes maximal d.h.    $D = 1$.

Bei einer weiteren Temperaturerhöhung nimmt der Schallwellenwiderstand des Eisens weiter ab, und damit wird auch der Durchlässigkeitsfaktor D wieder kleiner. Die Schalldurchlässigkeit des Schweißpunktes wird bis zum Erreichen der Schmelztemperatur durch Gleichung (3) bestimmt. Nach Erreichen der Schmelztemperatur wird die Schalldurchlässigkeit weiter vermindert, jetzt jedoch durch die starke Schallschwächung von Scherwellen in flüssigen Medien. Der Schwächungsgrad der Transversalwellen nach Erreichen der Schmelztemperatur $T_s$ hängt direkt von der Größe des aufgeschmolzenen Volumens ab. Hierbei gelten die bereits angegebenen Zusammenhänge.

Ein erneuter Anstieg der Ultraschalldurchlässigkeit ist deshalb im Gegensatz zu Aussagen des Standes der Technik (DE-AS 26 55 415) kein Zeichen für eine gute Schweißung, sondern läßt auf Störungen im Schweißprozeß schließen. Vor allem aber beziehen sich die Aussagen im Stand der Technik nicht auf Scherwellen.

Beim Punktschweißprozeß kommt es vor, daß das aufgeschmolzene Schweißgut z.B. durch Spritzerbildung oder zu geringem Elektrodendruck während der Schweißung aus der Schweißlinse herausgedrückt wird. In diesem Fall geht der Schweißlinse flüssiges Schweißgut verloren, samt der darin gespeicherten Wärmeenergie. Dieser Effekt macht sich durch einen Wiederanstieg des Durchlässigkeitsfaktors D bemerkbar.

Ausgehend von dem Zusammenhang zwischen der Ultraschalldurchlässigkeit D und dem Schallwellenwiderstand $Z_2$ im Schweißpunkt, läßt sich aus Gleichung (3) der in Gleichung (4) dargestellte Zusammenhang zwischen der Schallgeschwindigkeit $c_2$ im Schweißpunkt und dem Durch-lässigkeitsfaktor D des Schweißpunktes ableiten.

$$(4) \qquad c_2(t) = \sigma_1 {}^*c_1/\sigma_2 {}^* 1/\sqrt{(1+\sigma_1 {}^*c_1/\sigma_2 \sqrt{(1/D(t)-1)}\,)/\pi^*d^*f}$$

In Gleichung (4) bedeutet f die Ultraschallfrequenz.

Damit kann dem Durchlässigkeitsfaktor D(t) mit Hilfe von Gleichung (4) die Schallgeschwindigkeit im Schweißgut $c_2(t)$ zugeordnet werden. Das erfindungsgemäße Verfahren ermöglicht es damit, den Temperaturverlauf im Schweißpunkt T(t) als Funktion der Schweißdauer zu ermitteln. Dabei wird die Schallgeschwindigkeit $c_2(t)$ im Schweißpunkt mit einer vorgegebenen Temperaturabhängigkeit der Schallgeschwindigkeit $c_2(T)$ verglichen.

Dies geschieht dadurch, daß die ermittelte Schallgeschwindigkeit $c_2(t)$ mit einer vorgegebenen Temperaturabhängigkeit der Schallgeschwindigkeit im Schweißgut, $c_2(T)$, verglichen wird. Dazu wird in diesem Ausführungsbeispiel für die Temperaturabhängigkeit der Schallgeschwindigkeit im Schweißgut beispielhaft die folgende angenommene lineare Beziehung benutzt.

$$(4') \qquad T(t) = (c_{2o} - c_2(t))^* T_s / c_2$$

In dieser Gleichung bedeutet

$c_{2o}$   die Schallgeschwindigkeit im Schweißgut bei Raumtemperatur,
$T_s$   die Schmelztemperatur des Schweißgutes und
$c_2$   die Differenz der Schallgeschwindigkeiten zwischen Raumtemperatur und Schmelztemperatur.

Diese Beziehung kann durch eine für den jeweiligen Anwendungsfall experimentell oder theoretisch ermittelte Temperaturabhängigkeit der Schallgeschwindigkeit ersetzt werden.

Im weiteren wird aus dem ermittelten Temperaturverlauf T(t) im Schweißpunkt durch Vergleich mit der Schmelztemperatur des Eisens $T_s$, der Aufschmelzzeitpunkt $t_s$ des Schweißgutes bestimmt. Der ermittelte Aufschmelzzeitpunkt $t_s$ kennzeichnet den Beginn der Schweißlinsenbildung.

Der ermittelte Aufschmelzpunkt $t_s$ kennzeichnet dabei den Beginn der Schweißlinsenbildung, wobei die ab diesem Zeitpunkt zugeführte Energie zur Schweißlinsenbildung dient.

Für den zeitlichen Temperaturverlauf T(t) im Schweißgut kann ein funktionaler Zusammenhang nach Gleichung (5) angenommen werden.

$$(5) \qquad T(t) = A {}^* [1 - \exp\text{-}(B^*t)]$$

Dabei gelten für die Konstanten A und B die Beziehungen

$$(6) \qquad A = J^2 {}^*R_o {}^*d/k$$

$$(7) \qquad B = k/(c_v * \sigma * d)$$

In Gleichung (6) und (7) bedeuten

J die Stromdichte durch den Schweißpunkt,
$R_o$ der spezifische elektrische Widerstand des Schweißgutes,
d die Blechdicke,
k die Wärmeleitzahl des Systems Blech / Elektrode,
$\sigma$ die Dichte des Schweißgutes,
$c_v$ die spez. Wärme des Schweißgutes.

Aus den Gleichungen (6) und (7) ergibt sich für die Stromdichte folgender Zusammenhang:

$$(8) \qquad J^2 = A*B * c_v * \sigma/d$$

Daraus leitet sich ab, daß die Stromdichte durch den Schweißpunkt direkt proportional dem Produkt der Konstanten A und B ist. Die Proportionalitätskonstanten sind bekannte Materialkonstanten.

Zur Ermittlung der absoluten Schweißlinsengröße kann bei Messung der Stromstärke I der Elektrodendurchmesser $\phi_e$ nach Gleichung (9)

$$(9) \qquad \phi^2_e = I^2 * R_o /(A*B*c_v*\sigma)$$

bestimmt werden. In Gleichung (9) bedeutet

I den Effektivwert der Stromstärke,
A, B die Konstanten aus Gleichung (5),
$R_o$ der spez. elektrischen Widerstand des Schweißgutes,
$c_v$ die spez. Wärme des Schweißgutes,
$\sigma$ die Dichte des Schweißgutes.

Durch Verwendung einer vorgegebenen Temperaturabhängigkeit der Schallgeschwindigkeit, z. B. nach Gleichung (4') kann nach Gleichung (4) jedem Durchlässigkeitswert D ein Temperaturwert in der Schweißlinse zugeordnet werden. Ist ein erstes Minimum in der Schalldurchlässigkeit des Schweißpunktes erreicht worden, bedeutet ein erneuter Anstieg der Ultraschalldurchlässigkeit einen Abfall der Temperatur im Schweißpunkt. Unterschreitet die Temperatur im Schweißpunkt während der Stromflußphase einen vorgegebenen Schwellenwert z.B. die Schmelztemperatur, ist dies ein Hinweis auf eine Störung des Schweißprozesses und wird angezeigt.

Die Anzeige erfolgt dann, wenn ein zweites relatives Maximum der Ultraschalldurchlässigkeit erreicht wird und dieses Durchlässigkeitsmaximum einen vorgegebenen Höchstwert überschreitet.

Des weiteren kann kontinuierlich die Korrektur des Schweißlinsendurchmessers erfolgen. Wird eine Störung in der Weise angezeigt, daß die Temperatur der Schweißlinse für eine Zeitdauer $t_3$ die Schmelztemperatur unterschreitet, dann muß das durchgeführte Verfahren zur Ermittlung des Schweißlinsendurchmessers derart modifiziert werden; daß bei der Berechnung des Schweißlinsendurchmessers nach Gleichung (13) die Zeitdauer $t_3$, während der die Temperatur der Schweißlinse unterhalb der Schmelztemperatur bleibt, von der Gesamtschweißdauer t abgezogen wird.

$$(11) \qquad \phi = \phi_e *(-K_1*(D(t_{min})/D'_m - t_{min}) + K_2)$$

$K_1, K_2$ Konstanten, die durch Probeschweißungen ermittelt werden müssen,
$D(t_{min})$ ist der Wert der normierten Ultraschalldurchlässigkeit zum Zeitpunkt des Minimums der Ableitung.

Aus den bisherigen Ausführungen geht hervor, daß der Verlauf der Ultraschalldurchlässigkeitsfaktoren in einem Schweißpunkt als Funktion der Schweißdauer durch den Temperaturverlauf im Schweißunkt bestimmt wird. Dies gilt bis zum Erreichen der Schmelztemperatur im Schweißgut. Danach wird der Ultraschalldurchlässigkeitsfaktor durch die Größe des aufgeschmolzenen Schweißlinsenvolumens bestimmt. Bei bekannten Materialien von Schweißelektroden und Schweißgut und bei bekannter Temperaturabhängigkeit der Schallgeschwindigkeiten kann damit für jede Schweißstromstärke ein Musterverlauf des Ultraschalldurchlässigkeitsfaktors als Funktion der Schweißdauer vorherberechnet oder im rahmen von Probeschweißungen experimentell aufgezeichnet werden.

Durch diesen Musterverlauf ist der Temperaturverlauf im Schweißpunkt und die Schweißlinsengröße festgelegt. Beispielsweise müssen das Maximum der Durchlässigkeit und die Schmelztemperatur nach vorgebenen Zeiten erreicht werden.

In der Praxis ist neben einer Bewertung der Schweißpunkte eine Regelung des Schweißprozesses erwünscht, um schlechte Schweißungen zu vermeiden. Die Regelung des Schweißprozesses kann in der Weise erfolgen, daß der Verlauf der Ultraschalldurchlässigkeit mit einem vorgebenen Musterverlauf (Sollwert) verglichen wird. Bei Abweichungen von diesem Musterverlauf werden die Schweißparemeter, z.B. die Stromstärke entsprechend verändert, bis die nachfolgenden Durchlässigkeitswerte wieder mit dem Musterverlauf übereinstimmen.

Die Messung der Schallemission in einem zweiten Meßfenster, das z.B. jeweils direkt vor den Einschallzeitpunkten liegt, hat den Zweck Störungen bei der Bestimmung der Ultraschalldurchlässigkeitswerte, z. B. durch Spritzerbildung, zu erkennen. Werden in einem der zweiten Meßfenster Störsignale festgestellt, dann wird der nachfolgende Meßwert entsprechend dem Störeinfluß korrigiert oder durch den Mittelwert der Meßwerte vor und nach der Störung ersetzt.

Die Auswahl und die Anordnung des oder der Ultraschallsender und des oder der Ultraschallempfänger erfolgt entsprechend dem jeweiligen Anwendungsfall. Gegebenenfalls kann auch ein und derselbe Sensor als Ultraschallsender und -empfänger verwendet werden.

Darüberhinaus ist es auch möglich, Ultraschallwellen mit Laserstrahlen anzuregen.

Im folgenden soll deshalb lediglich exemplarisch ein Möglichkeit zur Realisierung des erfindungsgemäßen Verfahrens beschrieben werden:

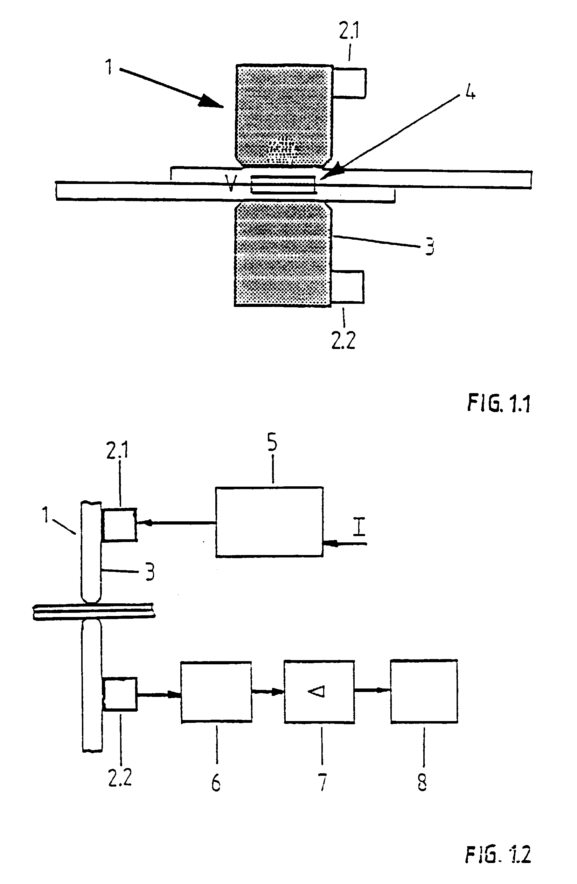

Fig. 1.1 zeigt die schematische Darstellung eines Ausführungsbeispiels der Erfindung mit an den Schweißelektroden angeordneter Sensorik. Die Elektroden 1 des Schweißgerätes sind mit Ultraschallwandlern versehen. Eine Elektrode des Schweißgerätes weist einen Ultraschallsender 2.1 auf. An der zweiten Elektrode befindet sich eine Empfangssonde 2.2, z.B. ein piezoelektrischer Ultraschallwandler.

Der Ultraschallsender 2.1 und der Empfänger 2.2 sind dabei auf der Außenwand des jeweiligen Elektrodenschaftes 3 aufgebracht. Von der Sendesonde 2.1 ausgehend erfolgt die Durchschallung der Schweißlinse 4 mittels horizontal polarisierter Transversalwellen.

Beim Einsetzen des Schweißstromes wird zu Beginn jeder Stromhalbwelle ein Generator 5 getriggert, der nach einer einstellbaren Verzögerungszeit ein elektrisches Burstsignal an die Sendesonde 2.1 abgibt. Diese erzeugt in der Schweißelektrode 1 ein Ultraschallsignal, das sich über die Elektrode durch den Schweißpunkt bzw. die Schweißlinse 4 zur zweiten Elektrode fortpflanzt. An der zweiten Elektrode wird dieses Signal mit einer Empfangssonde 2.2 empfangen. Ein Blockschaltbild der Anordnung ist in Fig. 1.2 dargestellt.

Das Empfangssignal wird schmalbandig mittels eines Frequenz filters 6 auf das Frequenzspektrum des Sendesignals gefiltert und in einem nachfolgenden Verstärker 7 um ca. 40 dB verstärkt. In der nachgeschalteten Auswerteeinheit 8 werden die Ultraschallsignale aufgezeichnet und analysiert. Die Auswerteeinheit 8 kann auch als Steuerbzw. Regeleinheit für den Schweißprozeß verwendet werden.

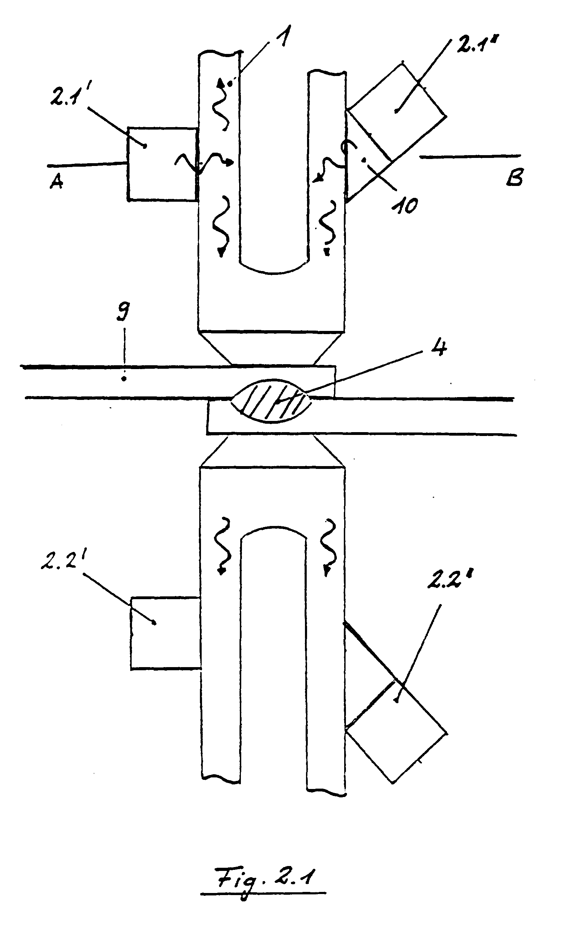

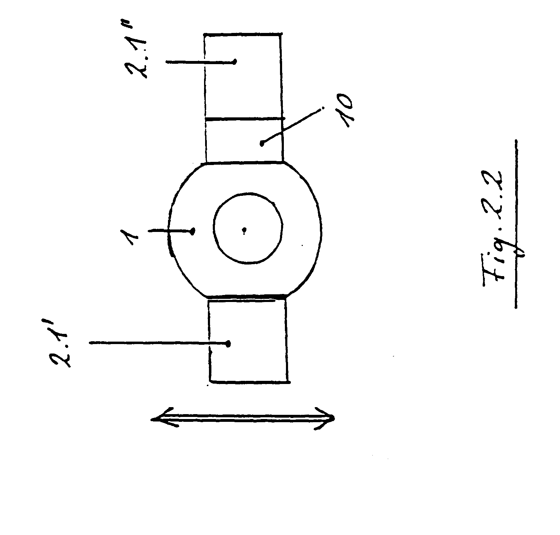

Fig. 2 zeigt verschiedene Möglichkeiten für die Einkoppelung und den Verlauf einer horizontal polarisierten Transversalwelle in der Wandung einer Rohrelektrode 1. Dabei zeigt Fig. 2.1 einen Längsschnitt und Fig. 2.2 einen Querschnitt bei der Linie A-B in Fig. 2.1.

Die von einem elektroakustischen Ultraschallwandler 2.1', der unter einem Winkel von 90° zur Rohrachse angeordnet ist, angeregte Welle läuft mit einer Frequenz von beispielsweise 100 KHz in die zu bewertende Schweißlinse 4 ein, die sich zwischen Blechen 9 gebildet hat. Die dabei eingesetzte Wellenlänge $\lambda$ wird so gewählt, daß $\lambda/2$ in etwa dem Durchmesser der Elektrode 1 bzw. der sich ergebenden Schweißlinse 4 entspricht.

Zur Verbesserung der Ultraschalleinbringung kann die Einschallung der transversalen Ultraschallwellen auch durch einen Ultraschallwandler 2.1" unter einem Winkel von z.B. 45° erfolgen, vgl. Figur 2.1 (rechte Seite). Das Winkelstück 10 ist ebenfalls aus Kupfer gefertigt. In diesem Fall geht die gesamte Ultraschallenergie in den unteren Teil der Elektrode 1. Bei der senkrechten Einschallung gelangen dagegen nur ca. 50 % des Sendesignals in den unteren Elektrodenteil, die andere Hälfte breitet sich in entgegengesetzter Richtung aus, vgl. Fig. 2.1 (linke Seite). Die optimale Polarisationsrichtung der Transversalwellen ist in Figur 2.2 angegeben.

Die eingeschallten Signale werden entsprechend ihrem Einschallwinkel an den Elektrodenwandungen reflektiert und breiten sich in der Elektrodenwandung durch wiederholte Reflektion "zick-zack" förmig aus. Bei der angegebenen Polarisationsrichtung (horizontal zur Elektrodenoberfläche) findet bei den Reflektionen an den Elektrodenwandungen keine Umwandlung in andere Wellenarten statt. Diese in der Elektrodenwandung erzeugte Wellenart wird in der Fachliteratur als "SH-Welle" (Shear-Horizontal) bezeichnet.

Die Verwendung dieser Wellenart ist für die Durchschallung der Elektroden und der Schweißlinse zur Erzielung eines hohen Wirkungsgrades vorteilhaft.

Weiter sind in Fig. 2.1 entsprechende Anordnungen der Ultraschallempfänger 2.2' (rechtwinklig) und 2.2" (45°-Winkel) dargestellt.

**Patentansprüche**

1. Verfahren zur Bewertung von Widerstandsschweißverbindungen mittels zweier Schweißelektroden, zwischen denen ein elektrischer Stromfluß erzeugt wird, unter Verwendung eines Ultraschallsenders, der den Schweißbereich mit Scherwellen beaufschlagt, und eines Ultraschallempfängers, mit folgenden Schritten:

   - während des Schweißvorgangs wird die Schallgeschwindigkeit $c_2$ der Ultraschallwellen im Schweißbereich als Funktion der Zeit t ermittelt,
   - aus der ermittelten Schallgeschwindigkeit $c_2(t)$ im Schweißbereich wird die Temperatur $T(t)$ des Schweißbereichs durch Vergleich mit einer vorher bestimmten Temperaturabhängigkeit der Schallgeschwindigkeit $c_2(t)$ im Schweißgut als Funktion der Schweißdauer ermittelt,
   - aus dem Temperaturverlauf $T(t)$ im Schweißbereich wird durch Vergleich mit der Schmelztemperatur des Schweißguts $T_s$ der Aufschmelzzeitpunkt $t_s$ des Schweißgutes bestimmt, und
   - aus dem Aufschmelzzeitpunkt $t_s$ wird während des Schweißvorgangs der am Ende der Schweißdauer $t_d$ zu erwartende Schweißlinsendurchmesser $\phi$ berechnet.

2. Verfahren nach Anspruch 1,
   dadurch **gekennzeichnet**, daß während des Schweißvorganges die Ultraschalldurchlässigkeit $D(t)$ (Ultraschalldurchlässigkeitsfaktor) als Funktion der Zeit gemessen und hieraus die momentane Schallgeschwindigkeit $c_2(t)$ im Schweißpunkt ermittelt wird.

3. Verfahren nach Anspruch 1 oder 2,
   dadurch **gekennzeichnet**, daß der Zeitpunkt, an dem die Schmelztemperatur $T_s$ erreicht wird, zusätzlich dadurch ermittelt wird, daß der Zeitpunkt bestimmt wird, an dem sich die zeitliche Änderung der Schwächung der Scherwellen von einem vergleichsweise kleinen auf einen vergleichsweise großen Wert ändert.

4. Verfahren nach einem der Ansprüche 1 bis 3, dadurch **gekennzeichnet**, daß die Scherwellen transversale Ultraschallwellen sind.

5. Verfahren nach Anspruch 2,
   dadurch **gekennzeichnet,** daß die Ultraschallgeschwindigkeit $c_2(t)$ aus der Ultraschalldurchlässigkeit $D(t)$ mittels folgender Gleichung berechnet wird:

$$c_2(t) = (\sigma_1 {}^*c_1/\sigma_2) * 1/\sqrt{(1+(\sigma_1 {}^*c_1/\sigma_2){}^*\sqrt{(1/D(t)\text{-}1)}\ /\pi {}^*d {}^*f}$$

wobei bedeuten:

   $\sigma_1$  Dichte der Schweißelektroden bzw. der Ultraschallquelle
   $\sigma_2$  Dichte des Schweißgutes,
   $c_1$  Schallgeschwindigkeit des Elektroden- bzw. Quellenmaterials,
   $c_2$  Schallgeschwindigkeit des Schweißgutes,
   $d$  Dicke der Schweißlinse,
   $f$  Ultraschallfrequenz.

6. Verfahren nach Anspruch 5,
   dadurch **gekennzeichnet**, daß zur Bestimmung der Schalldurchlässigkeit $D(t)$ des Schweißbereichs während jeder Stromhalbwelle des Schweißstromes aus dem Ausgangssignal $A(t)$ des Ultraschallempfängers

   - innerhalb eines ersten Zeitfensters i, das gegenüber dem Ultraschall-Sendesignal, dessen Sendepegel konstant gehalten wird, um eine definierte Verzögerungszeit verzögert ist, die mittlere Ultraschallenergie $E_{1i}$ gemäß der folgender Gleichung ermittelt wird,

$$E_{1i} = 1/\Delta t_1 \int_0^{\Delta t_1} A(t)^2\ dt$$

- und innerhalb eines zweiten, vor oder nach dem ersten Zeitfenster liegenden Zeitfensters, während dem keine Beaufschlagung des Schweißgutes mit Ultraschallwellen erfolgt, die durch den Schweißvorgang entstehende mittlere Schallemissionsenergie $E_{2j}$ gemäß der folgenden Gleichung ermittelt wird

$$E_{2j} = 1/\Delta t_2 \int_0^{\Delta t_2} A(t)^2 \, dt.$$

7. Verfahren nach Anspruch 5,
dadurch **gekennzeichnet,** daß zur Bestimmung der Schalldurchlässigkeit D(t) des Schweißbereichs während jeder Stromhalbwelle des Schweißstromes aus dem Ausgangssignal A(t) des Ultraschallempfängers

- innerhalb eines ersten Zeitfensters i, das gegenüber dem Ultraschall-Sendesignal, dessen Sendepegel konstant gehalten wird, um eine definierte Verzögerungszeit verzögert ist, die Ultraschallgröße $E_{1i}$ aus dem maximalen innerhalb dieses Zeitfensters auftretenden Ausgangssignals A(t) ermittelt wird,
- und innerhalb eines zweiten, vor oder nach dem ersten Zeitfenster liegenden Zeitfensters, während dem keine Beaufschlagung des Schweißgutes mit Ultraschallwellen erfolgt, die durch den Schweißvorgang entstehende Schallemissionsgröße $E_{2j}$ aus dem maximalen innerhalb des zweiten Zeitfensters auftretenden Ausgangssignal A(t) ermittelt wird.

8. Verfahren nach Anspruch 6 oder 7,
dadurch **gekennzeichnet**, daß bestimmte Meßwerte für die Ultraschalldurchlässigkeit D korrigiert werden, wenn der laufend bestimmte Schallemissionspegel $E_{2j}$ einen vorgegebenen Schwellenwert überschreitet.

9. Verfahren nach Anspruch 8,
dadurch **gekennzeichnet**, daß die Korrektur dadurch erfolgt, daß der gestörte Schalldurchlässigkeitswert $E_{1i}$ durch den Mittelwert der beiden Nachbarwerte ersetzt wird.

10. Verfahren nach einem der Ansprüche 1 bis 9,
dadurch **gekennzeichnet**, daß die Stromstärke gemessen und aus der gemessenen Stromstärke der momentane Elektrodendurchmesser E ermittelt wird.

11. Verfahren nach einem der Ansprüche 1 bis 10, dadurch **gekennzeichnet**, daß der am Ende der Schweißdauer t zu erwartende Schweißlinsendurchmesser φ mittels folgender Gleichung aus dem Aufschmelzzeitpunkt berechnet wird:

$$\phi^2 = \phi_e^2 * 2 * T_s * B * c_s * (t_d - t_s) / (c_v * (\exp(B * t_s) - 1))$$

wobei bedeuten:

$\phi_e$     Elektrodendurchmesser,
$c_s$     spez. Schmelzwärme des Schweißgutes,
$c_v$     spez. Wärme des Schweißgutes,
$t_d$     Gesamtschweißdauer,
$t_s$     Aufschmelzzeitpunkt,

und der Wert von B empirisch ermittelt wird.

12. Verfahren nach Anspruch 11, dadurch **gekennzeichnet**, daß der Wert von B sowie der Wert einer weiteren Größe A aus dem zeitlichen Temperaturverlauf T(t) im Schweißgut über den folgendem Zusammenhang

$$T(t) = A * (1 - \exp - (B * t))$$

insbesondere nach einem "best fit"-Verfahren bestimmt werden.

13. Verfahren nach Anspruch 11 oder 12,
dadurch **gekennzeichnet**, daß für die Werte von A und B die folgenden Beziehungen näherungsweise gelten:

$$A = J^2 * R_o * d/k$$

$$B = k/(c_v * \sigma * d)$$

wobei bedeuten

J    Stromdichte,
$R_o$   spez. elektrischen Widerstand des Schweißgutes,
$c_v$   spez. Wärme des Schweißgutes,
σ    Dichte des Schweißgutes,
d    Dicke des Schweißgutes
k    Wärmeleitzahl des Systems Schweißgut/Elektrode

und daß aus den ermittelten Werten von A und B die tatsächliche Stromdichte J im Schweißgut gemäß der folgenden Gleichung ermittelt wird:

$$J^2 = A*B*c_v*/d\sigma.$$

14. Verfahren nach einem der Ansprüche 1 bis 13, dadurch **gekennzeichnet**, daß während der Schweißung durch Änderung der Stromstärke I oder der Schweißdauer t das Schweißergebnis beeinflußt wird.

15. Verfahren nach einem der Ansprüche 1 bis 14, dadurch **gekennzeichnet**, daß unter Anwendung der Beziehung $A = J^2 *R_o*d/k$ ein "best fit" Aufschmelzzeitpunkt $t_s$ bestimmt wird, der weitgehend unabhängig von zufälligen Meßwertschwankungen der Ultraschalldurchlässigkeit D ist.

16. Verfahren nach einem der Ansprüche 1 bis 15, dadurch **gekennzeichnet**, daß zur Ermittlung der absoluten Schweißlinsengröße φ bei Messung der Stromstärke I der Elektrodendurchmesser $\phi_e$ nach Gleichung (12)

$$(12) \qquad \phi^2_e = I^2 *R_o /(A*B*c_v*\sigma)$$

bestimmt wird.

17. Verfahren nach einem der Ansprüche 1 bis 16,
dadurch **gekennzeichnet**, daß zur Anzeige von Störungen des Schweißprozesses (Schweißgut geht verloren, die Temperatur im Schweißpunkt unterschreitet als vorgegebenen Schwellenwert die Schmelztemperatur) ein zweites relatives Maximum der Ultraschalldurchlässigkeit angezeigt wird, wenn dieses Durchlässigkeitsmaximum einen vorgegebenen Höchstwert überschreitet.

18. Verfahren nach Anspruch 11,
dadurch **gekennzeichnet**, daß bei angezeigter Störung derart, daß die Temperatur der Schweißlinse für eine Zeitdauer $t_3$ die Schmelztemperatur unterschreitet das Verfahren zur Ermittlung des Schweißlinsendurchmessers so modifiziert wird, daß bei der Berechnung des Schweißlinsendurchmessers nach der Gleichung des Anspruchs 11 die Zeitdauer $t_3$ von der Gesamtschweißdauer abgezogen wird.

19. Anordnung zur Ultraschalleinbringung bei der Analyse von Widerstandsschweißverbindungen, mit

- einem Ultraschallsender, der die Widerstandsschweißverbindung mit Ultraschall beaufschlagt, und
- einem Ultraschallempfänger, der die Ultraschallsignale nach der Durchschallung empfängt, und dessen Ausgangssignal zur Bewertung und gegebenenfalls zur Regelung von Schweißprozessen eine Auswerte- und Steuereinheit auswertet,

dadurch **gekennzeichnet,** daß der Ultraschallsender (2.1) an der Außenwand des Elektrodenschaftmantels (3) oder des Elektrodenhalters befestigt ist, und für die Durchschallung der Schweißpunkte Scherwellen erzeugt.

20. Anordnung nach Anspruch 19,
dadurch **gekennzeichnet**, daß die Scherwellen transversale Ultraschallwellen oder Torsionswellen sind.

21. Anordnung nach Anspruch 19 oder 20,
dadurch **gekennzeichnet**, daß der Ultraschallsender an der Außenwand des Elektrodenschaftesmantels (3) oder des Elektrodenhalters der einen Elektrode (1) des Schweißgerätes und der Ultraschallempfänger (2.2) an der anderen Schweißelektrode angeordnet ist.

22. Anordnung nach Anspruch 21,
dadurch **gekennzeichnet**, daß lediglich an der Außenwand des Elektrodenschaftes oder -halters einer Elektrode ein Ultraschallwandler vorgesehen ist, der im Sende- und Empfangsbetrieb betreibbar ist.

23. Anordnung nach einem der Ansprüche 19 bis 22,
dadurch **gekennzeichnet**, daß die in der Elektrodenwandung mit einem elektroakustischen Ultraschallwandler angeregten Transversal- oder Torsionswellen im Frequenzbereich von 50 bis 500 KHz liegen.

24. Anordnung nach einem der Ansprüche 19 bis 23,
dadurch **gekennzeichnet**, daß der Arbeitsbereich für die Frequenz bis 1 MHz beträgt.

25. Anordnung nach einem der Ansprüche 19 bis 24,
dadurch **gekennzeichnet**, daß der Polarisationsvektor der horizontal polarisierten Transversalwelle senkrecht zur Rohrachse der Elektroden (1) ausgerichtet ist.

26. Anordnung nach einem der Ansprüche 19 bis 25,
dadurch **gekennzeichnet,** daß die Frequenz der für die Ultraschalleinbringung eingesetzten Transversal- oder Torsionswellen so gewählt wird, daß die zugehörige halbe Wellenlänge $\lambda/2$ in etwa dem Durchmesser der Schweißelektrode bzw. der Schweißlinse (4) entspricht.

27. Anordnung nach einem der Ansprüche 19 bis 26,
dadurch **gekennzeichnet**, daß horizontal polarisierte Transversalwellen unter einem Winkel eingeschallt werden.

**Claims**

1. A process for assessing resistance welded joints by means of two welding electrodes between which an electric current is generated, using an ultrasonic transmitter which impinges shear waves onto the weld region and using an ultrasound receiver, with the following steps:

   - during the weld operation the sonic velocity c2 of the ultrasonic waves in the weld region is determined as the function of the time t,
   - the temperature T(t) of the weld region is determined by the comparison with a previously ascertained temperature dependency of the sonic velocity c2(t) in the weld material as the function of the duration of the welding operation from the ascertained sonic velocity c2(t) in the weld region,
   - the melting time ts of the weld material is determined from the course of the temperature T(t) in the weld region by comparison with the melting point of the weld material Ts, and
   - the diameter $\phi$ of the weld nugget to be expected at the termination of the welding period t is calculated during the welding operation from the melting time ts.

2. A process according to claim 1,
**characterized by** the ultrasonic transmissivity D(t) (ultrasonic transmissivity factor) being measured during the welding operation as the function of time and the current sonic velocity c2(t) in the weld spot being determined therefrom.

3. A process according to one of the claims 1 or 2,
**characterized by** the time at which said melting point Ts is reached being additionallly determined by ascertaining the time at which the temporal change of said diminishment of said shear waves changes from a comparatively small to a comparatively large value.

4. A process according to one of the claims 1 to 3, **characterized by** said shear waves being transverse ultrasonic waves.

5. A process according to claim 2,
characterized by said ultrasonic velocity c2(t) being calculated from said ultrasonic transmissivity D(t) by means of the following equation:

$$c2(t) = (\sigma1*c1/\sigma2) * 1\sqrt{\sqrt{(1+(\sigma1*c/\sigma2) *\sqrt{(1/D(t)-1)}/\pi*d*f}}$$

with the following being:

σ1    the density of the weld electrodes, respectively the ultrasonic source,
σ2    the density of the weld material,
c1    the sonic velocity of the electrode material respectively of the source material,
c2    the sonic velocity of the weld material,
d     the density of the weld nugget,
f     the ultrasonic frequency.

6. A process according to claim 5,
**characterized by** in order to determine said sonic transmissivity D(t) of the weld region during each current halfwave of the weld current, from said output signal A(t) from said ultrasound receiver,

- the average ultrasonic energy Eli being determined within a first time window i, which is delayed by a defined delay time in contrast to said ultrasonic transmission signal the transmission level of which is held constant, according to the following equation,

$$E1i = 1/\Delta t1 \int_0^{\Delta t1} A(t)2 \, dt.$$

- and the average sound emission energy E2j resulting from the welding process being determined within a second time window which lies prior to or following said first time window and during which no ultrasonic waves are impinged on the weld material according to the following equation,

$$E2j = 1/\Delta t2 \int_0^{\Delta t2} A(t)2 \, dt.$$

7. A process according to claim 5,
**characterized by** in order to determine said sonic transmissivity D(t) of the weld region during each current halfwave of the weld current, from said output signal A(t) from said ultrasonic receiver,

- said ultrasound value Eli being determined within a first time window i, which is delayed by a defined delay time in contrast to said ultrasonic transmission signal the transmission level of which is held constant, from the maximum output signal A(t) occurring within said time window,

- and said sound emission value E2j resulting from the welding process being determined from the maximum output signal A(t) occurring within said second time window which lies prior to or following said first time window and during which no ultrasonic waves are impinged on the weld material.

8. A process according to claim 6 or 7,
**characterized by** specific measured values for said ultrasonic transmissivity D being corrected if the continuously determined sound emission level E2j exceeds a preset threshold value.

9. A process according to claim 8,
**characterized by** said correction occurring by replacing the disturbed sonic transmissivity value E1i with the average value of the two adjacent values.

10. A process according to one of the claims 1 to 9,
**characterized by** the current intensity being measured and the current diameter of the electrode being determined from said measured current intensity.

11. A process according to one of the claims 1 to 10,
**characterized by** the diameter of the weld nugget to be expected at the termination of the welding period t being calculated from the melting time according to the following equation:

$$\phi2 = \phi2e*2*Ts*B*cs*(t-ts)/(cv*(exp(B*ts)-1))$$

with the following being:

$\phi e$   the diameter of the electrodes,
cs   the specific melting heat of the weld material,
cv   the specific heat of the weld material,
t   the overall duration of the welding operation,
ts   the melting time,

and the value of B being empirically determined.

12. A process according to claim 11,
**characterized by** said value of B as well as a further value A being determined, in particular, according to a "best-fit" method from the temporal course of said temperature T(t) in the weld material via the following relationship

$$T(t) = A*(1-exp - (B*t).$$

13. A process according to claim 11 or 12,
**characterized by** the following relationships standing by approximation for said values of A and B:

$$A = J2 *Ro*d/k$$

$$B = k/ (cv*\sigma*d)$$

with the following being:

J   the density of the current
Ro   the specific electric resistance of the weld material,
cv   the specific heat of the weld material
$\sigma$   the density of the weld material,

d    the thickness of the weld material,

k    the thermal conduction coefficient of the arrangement weld material/electrode,

and the actual current density J in the weld material being determined from the determined values of A and B according to the following equation:

$$J2 = A*B*cv*/d\sigma$$

14. A process according to one of the claims 1 to 13, **characterized by** the welding results being influenced by changing the current intensity I or said welding period t during welding.

15. A process according to one of the claims 1 to 14, **characterized by** a "best-fit" melting time ts, which is largely independent of the coincidental measurement fluctuations of said ultrasonic transmissivity D, being determined applying the relationship A = J2 *Ro*d/k.

16. A process according to one of the claims 1 to 15, **characterized by** said diameter of the electrode $\phi$e being determined according to equation (12) in order to determine the absolute size $\phi$ of the weld nugget when measuring said current intensity I

$$(12) \qquad \phi 2e = I2 *Ro/(A*B*cv*\sigma).$$

17. A process according to one of the claims 1 to 16, **characterized by** for the indication of disturbances in the welding process (weld material is lost, the temperature in the weld spot drops below the melting point preset as the threshold value), a second relative maximum of said ultrasonic transmissivity being indicated if said transmissivity maximum exceeds a preset peak value.

18. A process according to claim 11,
**characterized by** if a disturbance is indicated in such a manner that the temperature of the weld nugget drops below the melting point for a time period t3, said process for determining said diameter of the weld nugget being modified in such a manner that in calculating said diameter of said weld nugget according to the equation of claim 11 said time period t3 is substracted from the overall duration of the welding operation.

19. An arrangement for utilizing ultrasound in the analysis of resistance welded joints having

-    an ultrasonic transmitter which impinges said resistance welded joint with ultrasound, and
-    an ultrasound receiver which receives the ultrasonic signals following sonic inspection and the output signals of which an evaluation and control unit evaluates in order to assess and, if need be, to control the welding processes

**characterized by** said ultrasonic transmitter (2.1) being attached to the outer wall of nappe of the electrode shank (3) or to the electrode holder, and generating shear waves for the sonic inspection of the weld spots.

20. An arrangement according to claim 19,
**characterized by** said shear waves being transverse ultrasonic waves or torsion waves.

21. An arrangement according to claim 19 or 20,
**characterized by** said ultrasonic transmitter being disposed at the outside wall of said nappe of said electrode shank (3) or said electrode holder of the one electrode (1) of the welder and said ultrasonic receiver (2.2) being disposed at the other weld electrode.

22. An arrangement according to claim 21,
**characterized by** an ultrasonic transducer which can be operated in transmission and reception operation being only provided at said outside wall of said electrode shank or holder.

23. An arrangement according to one of the claims 19 to 22,
**characterized by** the transverse or torsion waves activated in the electrode wall with an electro-acoustic ultrasonic transducer lying in the frequency range from 50 to 500 KHz.

24. An arrangement according to one of the claims 19 to 23,
**characterized by** the operation range for the frequency amounting up to 1 MHz.

25. An arrangement according to one of the claims 19 to 24,
**characterized by** the polarization vector of the horizontally polarized transverse waves being aligned perpendicular to the axis of the tube of the electrodes (1).

26. An arrangement according to one of the claims 19 to 25,
**characterized by** the frequency of said transverse or torsion waves employed for utilizing ultrasound is selected in such a manner that the respective halfwave /2 corresponding approximately to the diameter of the weld electrodes, respectively of the weld nugget (4).

27. An arrangement according to one of the claims 19 to 26,
**characterized by** horizontally polarized transverse waves being irradiated at an angle.

## Revendications

1. Procédé pour l'évaluation de joints soudés par résistance à l'aide de deux électrodes de soudage, entre lesquelles est produit un flux de courant électrique, moyennant l'utilisation d'un émetteur d'ultrasons qui charge la zone de soudage avec des ondes de cisaillement, et d'un récepteur d'ultrasons, comportant les étapes suivantes :

   - pendant l'opération de soudage, la vitesse sonique $c_2$ des ondes ultrasoniques dans la zone de soudage est déterminée en fonction du temps t,
   - la température T(t) de la zone de soudage est déterminée à partir de la vitesse sonique déterminée $c_2$(t) dans la zone de soudage par comparaison à une dépendance, déterminée au préalable, vis-à-vis de la température, de la vitesse sonique $c_2$(t) dans la soudure en fonction de la durée de soudage,
   - l'instant de fusion $t_s$ de la soudure est déterminé à partir de l'allure de température T(t) dans la zone de soudage par comparaison à la température de fusion $T_s$ de la soudure, et
   - le diamètre $\phi$ de la lentille de soudure, à laquelle il faut s'attendre à la fin de la durée de soudage $t_d$, est déterminé à partir de l'instant de fusion $t_s$, pendant l'opération de soudage.

2. Procédé selon la revendication 1, caractérisé en ce que pendant l'opération de soudage la transmissibilité D(t) pour les ultrasons (facteur de transmission des ultrasons) est mesurée en fonction du temps et la vitesse sonique instantanée $t_2$(t) au niveau du point de soudage est déterminée à partir de cette transmissibilité.

3. Procédé selon la revendication 1 ou 2, caractérisé en ce que l'instant, auquel la température de fusion $T_s$ est atteinte, est en outre déterminé par le fait que l'instant, auquel se produit la variation dans le temps de l'affaiblissement des ondes de cisaillement d'une valeur comparativement faible à une valeur comparativement élevée, est déterminé.

4. Procédé selon l'une des revendications 1 à 3, caractérisé en ce que les ondes de cisaillement sont des ondes ultrasoniques transversales.

5. Procédé selon la revendication 2, caractérisé en ce que la vitesse $c_2$(t) des ultrasons est calculée à partir de la transmissibilité D(t) pour les ultrasons, conformément à la relation suivante :

$$c_2(t) = (\sigma_i {}^*c_1/\sigma_2) {}^* 1/\sqrt{(1+(\sigma_1 {}^*c_1/\sigma_2) {}^* \sqrt{(1/D(t) - 1)}/\pi {}^*d {}^*f}$$

avec :

$s_1$   densité des électrodes de soudage ou de la source d'ultrasons,
$s_2$   densité de la soudure,
$c_1$   vitesse sonique dans le matériau des électrodes ou de la source,
$c_2$   vitesse sonique dans la soudure,

d	épaisseur de la lentille de soudure,

f	fréquence des ultrasons.

**6.** Procédé selon la revendication 5, caractérisé en ce que pour déterminer la transmissibilité D(t) de la zone de soudure pour le son pendant chaque alternance du courant de soudage à partir du signal de sortie A(t) du récepteur d'ultrasons :

- pendant une première fenêtre temporelle i, qui est retardée, par rapport au signal d'émission ultrasonore dont le niveau d'émission est maintenu constant, d'un retard défini, l'énergie moyenne $E_{1i}$ est déterminée conformément à la relation suivante :

$$E_{1i} = 1/\Delta t_1 \int_0^{\Delta t_1} A(t)^2 \, dt$$

- et pendant une seconde fenêtre temporelle, située en amont ou en aval de la première fenêtre temporelle et pendant laquelle il ne se produit aucune charge de la soudure par des ondes ultrasonores, l'énergie moyenne d'émission du son $E_{2j}$, qui apparaît pendant l'opération de soudage, est déterminée conformément à la relation.

$$E_{2j} = 2/\Delta t_2 \int_0^{\Delta t_2} A(t)^2 \, dt$$

**7.** Procédé selon la revendication 5, caractérisé en ce que pour la détermination de la transmissibilité D(t) de la zone de soudage pour le son pendant chaque alternance du courant de soudage à partir du signal de sortie A(t) du récepteur d'ultrasons,

- pendant une première fenêtre temporelle i, qui est retardée par rapport au signal d'émission ultrasonore, dont le niveau d'émission est maintenu constant, d'un retard défini, la grandeur ultrasonore $E_{1i}$ est déterminée à partir du signal de sortie maximum A(t) qui apparaît à l'intérieur de cette fenêtre temporelle, et
- pendant une deuxième fenêtre temporelle, située en amont ou en aval de la première fenêtre temporelle, pendant laquelle il ne se produit aucune charge de la soudure par les ondes ultrasonores, la grandeur d'émission acoustique $E_{2j}$, qui apparaît pendant l'opération de soudage, est déterminée à partir du signal de sortie maximum A(t) qui apparaît pendant la deuxième fenêtre temporelle.

**8.** Procédé selon la revendication 6 ou 7, caractérisé en ce que les valeurs de mesure déterminées pour la transmissibilité D pour les ultrasons sont corrigées lorsque le niveau d'émission acoustique $E_{2j}$ déterminé en permanence dépasse par le haut une valeur de seuil prédéterminée.

**9.** Procédé selon la revendication 8, caractérisé en ce que la correction est exécutée par le fait que la valeur de transmissibilité perturbée $E_{1i}$ pour le son est remplacée par la valeur moyenne des deux valeurs voisines.

**10.** Procédé selon l'une des revendications 1 à 9, caractérisé en ce que l'intensité du courant est mesurée et que le diamètre instantané E des électrodes est déterminé à partir de l'intensité du courant mesuré.

**11.** Procédé selon les revendications 1 à 10, caractérisé en ce que le diamètre $\phi$ de la lentille de soudure, auquel il faut s'attendre à la fin de la durée de soudage t, est calculé au moyen de la relation suivante à partir de l'instant de fusion :

$$\phi^2 = \phi_e^2 * 2 * T_s * B * c_s * (t_d - t_s)/(c_v * (\exp(B * t_s) - 1))$$

avec :

$\phi_e$     diamètre des électrodes,

$c_s$     chaleur de fusion spécifique de la soudure,

$c_v$     chaleur spécifique de la soudure,

$t_d$     durée totale de soudage,

$t_s$     instant de fusion,

et la valeur de B étant déterminée de façon empirique.

**12.** Procédé selon la revendication 11, caractérisé en ce que la valeur de B ainsi que la valeur d'une autre grandeur A sont déterminées à partir de la variation dans le temps T(t) de la température dans la soudure au moyen de la relation suivante

$$T(t) = A*(1-\exp-(B*t))$$

notamment selon un procédé "best fit".

**13.** Procédé selon la revendication 11 ou 12, caractérisé en ce que pour les valeurs de A et B, les relations suivantes sont valables de façon approximative :

$$A = J^2*R_o*d/k$$

$$B = k/(c_v*\sigma*d)$$

avec

J     densité de courant,

$R_o$     résistance électrique spécifique de la soudure,

$c_v$     chaleur spécifique de la soudure,

$\sigma$     densité de la soudure

d     épaisseur de la soudure

k     conductibilité thermique du système soudure/électrode, et que la densité de courant effective J dans la soudure est déterminée conformément à la relation suivante à partir des valeurs déterminées de A et B :

$$J^2 = A*B*c_v*/d\sigma.$$

**14.** Procédé selon l'une des revendications 1 à 13, caractérisé en ce que, pendant le soudage, le résultat de soudage est influencé par modification de l'intensité du courant I ou de la durée de soudage t.

**15.** Procédé selon l'une des revendications 1 à 14, caractérisé en ce qu'un instant de fusion "best fit" $t_s$, qui est dans une large mesure indépendant des variations aléatoires de la valeur de mesure de la transmissibilité D pour les ultrasons, est déterminé en utilisant la relation $A = J^2 *R_o *d/k$.

**16.** Procédé selon l'une des revendications 1 à 15, caractérisé en ce que pour la détermination de la grandeur absolue $\phi$ de la lentille de soudure, lors de la mesure de l'intensité du courant I, le diamètre $\phi_e$ des électrodes est déterminé conformément à la relation (12)

$$(12) \qquad \phi_o^2 = I^2 *R_o /(A*B*c_v*\sigma)$$

**17.** Procédé selon l'une des revendications 1 à 16, caractérisé en ce que pour l'affichage de perturbations du processus de soudage (la soudure est perdue, la température au point de soudure tombe au-dessous de la température de fusion en tant que valeur de seuil prédéterminée), un second maximum relatif de la transmissibilité par les ultrasons est affiché lorsque ce maximum de transmissibilité dépasse une valeur maximale prédéterminée.

**18.** Procédé selon la revendication 11, caractérisé en ce que dans le cas où une perturbation est affichée par le fait que la température de la lentille de soudure tombe au-dessous de la température de fusion pendant un intervalle de temps $t_3$, le procédé de détermination du diamètre de la lentille de soudure est modifié de telle sorte que lors du calcul du diamètre de la lentille de soudure conformément à la relation de la revendication 11, la durée $t_3$ est soustraite de la durée totale de soudage.

**19.** Dispositif pour l'application d'ultrasons lors de l'analyse de joints soudés par résistance, comportant

- un émetteur d'ultrasons qui charge le joint soudé par résistance avec des ultrasons, et
- un récepteur d'ultrasons, qui reçoit les signaux ultrasonores après la transmission des ultrasons et dont le signal de sortie est utilisé par une unité d'évaluation et de commande pour évaluer et éventuellement régler des processus de soudage,

caractérisé en ce que l'émetteur d'ultrasons (2.1) est fixé à la paroi extérieure de l'enveloppe (3) de la tige d'électrode ou du dispositif de fixation des électrodes, et produit des ondes de cisaillement pour l'irradiation des points de soudure par les ultrasons.

**20.** Dispositif selon la revendication 19, caractérisé en ce que les ondes de cisaillement sont des ondes ultrasonores transversales ou des ondes de torsion.

**21.** Dispositif selon la revendication 19 ou 20, caractérisé en ce que l'émetteur d'ultrasons est disposé sur la paroi extérieure de l'enveloppe (3) de la tige d'une électrode ou du support d'une électrode (1) de soudage et que le récepteur d'ultrasons (2.2) est disposé sur l'autre électrode de soudage.

**22.** Dispositif selon la revendication 21, caractérisé en ce que le transducteur d'ultrasons, qui peut fonctionner dans le mode d'émission et dans le mode de réception, est prévu uniquement sur la paroi extérieure de la tige de l'électrode ou du support de l'électrode.

**23.** Dispositif selon l'une des revendications 19 à 22, caractérisé en ce que les ondes transversales ou les ondes de torsion, qui sont excitées dans la paroi de l'électrode avec un transducteur électroacoustique à ultrasons, se situent dans la gamme de fréquences de 50 à 500 MHz.

**24.** Dispositif selon l'une des revendications 19 à 23, caractérisé en ce que la plage de travail pour la fréquence est égale jusqu'à 1 MHz.

**25.** Dispositif selon l'une des revendications 19 à 24, caractérisé en ce que le vecteur de polarisation de l'onde transversale polarisée horizontalement est perpendiculaire à l'axe du tube des électrodes (1).

**26.** Dispositif selon l'une des revendications 19 à 25, caractérisé en ce que la fréquence des ondes transversales ou des ondes de torsion est utilisée pour l'application des ultrasons et est choisie de telle sorte que la demi-longueur d'onde associée $\lambda/2$ correspond approximativement au diamètre de l'électrode de soudage ou de la lentille de soudure (4).

**27.** Dispositif selon l'une des revendications 19 à 26, caractérisé en ce que des ondes transversales polarisées horizontalement sont appliquées sous un certain angle.

FIG. 1.1

FIG. 1.2

*Fig. 2.1*

Fig. 2.2